# EUROPÄISCHE PATENTANMELDUNG

(11) **EP 4 825 483 A1**
(43) Veröffentlichungstag der Anmeldung: **21.10.2026**
(21) Anmeldenummer: 25170892.1
(22) Anmeldetag: 16.04.2025
(51) Int. Cl.: B01J 8/06, C01B 3/04

(54) **HERSTELLUNG EINES WASSERSTOFFPRODUKTS DURCH SPALTEN VON AMMONIAK**

(71) Anmelder: Linde GmbH, 82049 Pullach (DE); Technische Universität München, in Vertretung des Freistaates Bayern, 80333 München (DE)
(72) Erfinder: Bohn, Jan-Peter, 82049 Pullach (DE); Fahr, Steffen, 80333 München (DE); Klein, Harald, 80333 München (DE)
(74) Vertreter: Fischer, Werner

(57) **Zusammenfassung**

Es wird ein Verfahren (100) zur Herstellung eines Wasserstoffprodukts (10), das die Schritte des Einspeisens eines Ammoniak enthaltenden Reaktionseinsatzes (1) in eine Reaktoranordnung (210, 310, 410, 510), die einen oder mehrere Rohrreaktoren (101, 201, 301) mit einer Vielzahl von Reaktionsrohren (111) aufweist, des Beheizens zumindest eines Teils der Reaktionsrohre (111) in der Reaktoranordnung (210, 310, 410, 510) unter Verwendung von Heizenergie, die in einer Gesamtheizenergiemenge bereitgestellt wird, des Spaltens zumindest eines Teils des Ammoniaks des Reaktionseinsatzes (1) in der Reaktoranordnung (210, 310, 410, 510) unter Verwendung von Wärme, die unter Verwendung der Heizenergie erzeugt wird, und des Entnehmens eines Stickstoff und Wasserstoff enthaltenden Spaltgases (2) aus der Reaktoranordnung (210, 310, 410, 510) und Aufbereitens (120) zumindest eines Teils des Spaltgases (2) zu dem Wasserstoffprodukt (10) umfasst, wobei zur Bereitstellung der Gesamtheizenergiemenge Elektroenergie und Brenngasenergie verwendet werden und das Verfahren (100) einen ersten und einen zweiten Verfahrensmodus umfasst, wobei ein Anteil der Elektroenergie an der Gesamtheizenergiemenge in dem ersten Verfahrensmodus auf einen höheren Wert als in dem zweiten Verfahrensmodus eingestellt wird und ein Anteil der Brenngasenergie an der Gesamtheizenergiemenge in dem ersten Verfahrensmodus auf einen niedrigeren Wert als in dem zweiten Verfahrensmodus eingestellt wird. Eine Anlage wird ebenfalls vorgeschlagen.

## Beschreibung

### Gebiet

Die Erfindung betrifft ein Verfahren zum Herstellen von Wasserstoff durch Spalten von Ammoniak und eine entsprechende Anlage.

### Hintergrund

Ammoniak kann katalytisch zu Stickstoff und Wasserstoff gespalten (zerlegt, gecrackt, reformiert) werden. Die Reaktion ist endotherm und wird durch niedrigen Druck und hohe Temperatur begünstigt. Um einen Wasserstoffverdichter zu vermeiden, sind dennoch höhere Drücke wünschenswert.

Die Hauptreaktionsprodukte der Spaltung von Ammoniak, Wasserstoff und Stickstoff, können in einem Gemisch als Produkt bereitgestellt werden, oder es kann eine Aufreinigung des Wasserstoffs zu einem Wasserstoffprodukt erfolgen, wie im Rahmen der vorliegenden Offenbarung der Fall.

Aus der Patent- und Nichtpatentliteratur sind hierfür unterschiedliche Verfahrenskonzepte und Reaktoren beschrieben. Daher kann hier zu weiteren Details auf die Literatur verwiesen werden, beispielsweise Dewen Sima et al., "Enhanced low temperature catalytic activity of Ni/Al-Ce0.8Zr0.2O2 for hydrogen production from ammonia decomposition", Int. J. Hydrogen Energy 2020, 45, 9342-9352.

Im Zuge der angestrebten Reduktion an lokalen Kohlendioxidemissionen und dem Wunsch nach Möglichkeiten zur flexiblen Nutzung fluktuierender regenerativ erzeugter elektrischer Energie wäre es wünschenswert, auch Verfahren zur Ammoniakspaltung entsprechend betreiben zu können.

Aus einem Artikel von Chidozie Eluwah und Paul S. Fennell, "Novel carbon-free innovation in centralised ammonia cracking for a sustainable hydrogen economy: the hybrid air-volt ammonia cracker (HAVAC) process", Energ. Adv. 2024, 3, 2627-2647, ist ein unter Verwendung von Elektroenergie und Verbrennungsenergie betreibbarer Ammoniakcracker bekannt, der allerdings nach Art eines typischen Autothermreformers, d.h. durch wärmelieferndes Umsetzen eines Teils des Reaktorfeeds in einem Reaktionsraum, betrieben wird.

Die vorliegende Erfindung stellt sich die Aufgabe, entsprechende Verfahren und Anlagen zur Herstellung von Wasserstoff durch Spalten von Ammoniak zu verbessern und insbesondere effizienter zu gestalten.

### Überblick

Vor diesem Hintergrund werden eine Verfahren zum Herstellen von Wasserstoff durch Spalten von Ammoniak und eine entsprechende Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zur Herstellung eines Wasserstoffprodukts umfasst das Einspeisen eines Ammoniak enthaltenden Reaktionseinsatzes in eine Reaktoranordnung, die einen oder mehrere Rohrreaktoren mit einer Vielzahl von Reaktionsrohren aufweist, das Beheizen zumindest eines Teils der Reaktionsrohre in der Reaktoranordnung unter Verwendung von Heizenergie, die in einer Gesamtheizenergiemenge bereitgestellt wird, das Spalten zumindest eines Teils des Ammoniaks des Reaktionseinsatzes in der Reaktoranordnung unter Verwendung von Wärme, die unter Verwendung der Heizenergie erzeugt wird, und das Entnehmen eines Stickstoff und Wasserstoff enthaltenden Spaltgases aus der Reaktoranordnung und Aufbereiten zumindest eines Teils des Spaltgases zu dem Wasserstoffprodukt.

Das vorgeschlagene Verfahren unterscheidet sich insbesondere durch die Verwendung von bewährten Rohrreaktoren von bekannten Verfahren, insbesondere von einem Verfahren, wie es bei Eluwah und Fennel (siehe oben) beschrieben ist. Der in dem vorgeschlagenen Verfahren verwendete Reaktor kann insbesondere nach Art eines für die Dampfreformierung oder die konventionelle Ammoniakspaltung eingesetzten Reaktors aufgebaut sein, wie auch unten noch erläutert.

Dadurch, dass in dem vorgeschlagenen Verfahren an sich bekannte Reaktordesigns, nämlich Rohrreaktoren, verwendet werden, profitiert das vorgeschlagene Verfahren von den umfangreichen technischen Erfahrungen mit solchen Reaktordesigns. Ein Rückgriff auf Speziallösungen ist nicht erforderlich.

Zur Bereitstellung der Gesamtheizenergiemenge wird in dem vorgeschlagenen Verfahren Elektroenergie und Brenngasenergie verwendet und das Verfahren umfasst einen ersten und einen zweiten Verfahrensmodus, wobei ein Anteil der Elektroenergie an der Gesamtheizenergiemenge in dem ersten Verfahrensmodus auf einen höheren Wert als in dem zweiten Verfahrensmodus eingestellt wird und ein Anteil der Brenngasenergie an der Gesamtheizenergiemenge in dem ersten Verfahrensmodus auf einen niedrigeren Wert als in dem zweiten Verfahrensmodus eingestellt wird.

Der vorgeschlagene flexible Betrieb mit unterschiedlichen Anteilen an Elektroenergie und Brenngasenergie in dem ersten und zweiten Verfahrensmodus, zwischen denen ein Kontinuum an Zwischenbetriebsmodi vorgesehen sein kann oder diskrete Zwischenbetriebsmodi vorgesehen sein können, wobei die Anteile an Elektroenergie und Brenngasenergie kontinuierlich oder schrittweise verändert werden können, bietet erhebliche Vorteile, insbesondere im Hinblick auf die Nutzung erneuerbarer Energien und die Nutzung von "überschüssigem Strom", d.h. des sogenannten "Peak Shaving", oder die Überbrückung von Strommangellagen. Indem ein Verfahren wie vorgeschlagen flexibel zwischen Elektroenergie und Brenngasenergie wechselt, kann sie ihren Heizenergiebedarf an die Verfügbarkeit anpassen.

Diese Flexibilität trägt zur besseren Integration erneuerbarer Energien bei. Da Wind- und Solarstrom wetterabhängig schwanken, existieren Zeiten mit Stromüberschüssen und Strommangel. Eine Einrichtung, die flexibel zwischen Elektroenergie und Brenngasenergie wechselt, kann Strom dann nutzen, wenn erneuerbare Energie im Überfluss vorhanden ist, und in Zeiten geringer Erzeugung auf Brenngas umstellen. Insgesamt führt diese Flexibilität zu einer wirtschaftlichen Optimierung, einer Reduktion der Kohlendioxidemissionen und einer erhöhten Versorgungssicherheit, was sowohl für Unternehmen als auch für das gesamte Energiesystem von Vorteil ist.

In Ausgestaltungen des vorgeschlagenen Verfahrens umfasst das Aufbereiten zumindest eines Teils des Spaltgases einen ersten Aufbereitungsschritt und einen zweiten Aufbereitungsschritt stromab des ersten Aufbereitungsschritts, wobei dem ersten Aufbereitungsschritt das Spaltgas oder ein Teil hiervon zugeführt wird und eine erste Wasserstofffraktion und eine erste Restgasfraktion entnommen werden, wobei dem zweiten Aufbereitungsschritt die erste Restgasfraktion oder ein Teil hiervon zugeführt wird und eine zweite Wasserstofffraktion und eine zweite Restgasfraktion entnommen werden, wobei die erste Restgasfraktion gegenüber dem Spaltgas an Wasserstoff abgereichert und an Stickstoff angereichert ist und die zweite Restgasfraktion gegenüber der ersten Restgasfraktion an Wasserstoff abgereichert und an Stickstoff angereichert ist, und wobei die erste Wasserstofffraktion oder ein Teil hiervon und die zweite Wasserstofffraktion oder ein Teil hiervon zur Bereitstellung des Wasserstoffprodukts verwendet werden.

Eine derartige Ausgestaltung ermöglicht es, die erste Restgasfraktion insbesondere in dem zweiten Verfahrensmodus als Brenngas, d.h. für die Bereitstellung der Brenngasenergie, zu verwenden. Der erste Aufbereitungsschritt kann daher unter Minimierung des apparativen Aufwands so ausgestaltet werden, dass die erste Restgasfraktion noch beträchtliche Anteile an Wasserstoff enthält, so dass sich diese als Brenngas eignet. Gleichzeitig kann in dem ersten Aufbereitungsschritt der Anteil an Stickstoff derart reduziert werden, dass der zweite Aufbereitungsschritt effizienter betrieben werden kann, da dieser mit weniger Gas belastet wird. Auf diese Weise kann eine insgesamt vorteilhafte Ausbeute an Wasserstoff erzielt und der Trennaufwand in der Aufbereitung auf das Notwendige reduziert werden.

Eine derartige Ausgestaltung umfasst insbesondere, dass die erste Restgasfraktion einen Gehalt von 35 bis 65 Volumenanteilen Stickstoff und 35 bis 65 Volumenanteilen Wasserstoff aufweist und/oder die zweite Restgasfraktion einen Gehalt von 80 bis 99 Volumenanteilen Stickstoff und 1 bis 20 Volumenanteilen Wasserstoff aufweist.

Wie mit anderen Worten bereits erwähnt, kann in dem zweiten Verfahrensmodus dem Aufbereitungsschritt ein erster Teil der ersten Restgasfraktion zugeführt werden und ein zweiter Teil der ersten Restgasfraktion kann zur Bereitstellung der Brenngasenergie verwendet werden. Vorteile wurden bereits genannt. Selbstverständlich ist es auch möglich, dass in dem zweiten Verfahrensmodus, oder in dem ersten und zweiten Verfahrensmodus, die zweite Restgasfraktion oder ein Teil hiervon zur Bereitstellung der Brenngasenergie verwendet wird.

In Ausgestaltungen kann eine Reaktoranordnung verwendet werden, in der zumindest ein Teil der Reaktionsrohre sowohl mit der Elektroenergie als auch mit der Brenngasenergie beheizbar sind, und/oder es kann eine Reaktoranordnung verwendet werden, in der ein erster Teil der Reaktionsrohre nur mit der Elektroenergie und ein zweiter Teil der Reaktionsrohre nur mit der Brenngasenergie beheizbar sind.

Der erste Teil der Reaktionsrohre kann dabei stromauf oder stromab des zweiten Teils der Reaktionsrohre angeordnet sein, oder der erste Teil der Reaktionsrohre kann parallel zu dem zweiten Teil der Reaktionsrohre angeordnet sein. Es kann also eine serielle oder parallele Anordnung vorgesehen sein. In Ausgestaltungen mit serieller Anordnung kann ein erster Anteil der gesamten Umsetzung mit einer der Energieformen und der Rest mit einer anderen Energieform erfolgen. Bei paralleler Anordnung kann ggf. bei Verfügbarkeit nur einer der Energieformen der parallel geschaltete Zweig stillgelegt werden.

Insbesondere kann in entsprechenden Ausgestaltungen der erste Teil der Reaktionsrohre in einem der mehreren Rohrreaktoren und der zweite Teil der Reaktionsrohre in einem weiteren der mehreren Rohrreaktoren angeordnet sein.

Eine Anlage zur Herstellung eines Wasserstoffprodukts ist zum Einspeisen eines Ammoniak enthaltenden Reaktionseinsatzes in eine Reaktoranordnung, die einen oder mehrere Rohrreaktoren mit einer Vielzahl von Reaktionsrohren aufweist, zum Beheizen zumindest eines Teils der Reaktionsrohre in der Reaktoranordnung unter Verwendung von Heizenergie, die in einer Gesamtheizenergiemenge bereitgestellt wird, zum Spalten zumindest eines Teils des Ammoniaks des Reaktionseinsatzes in der Reaktoranordnung unter Verwendung von Wärme, die unter Verwendung der Heizenergie erzeugt wird, und zum Entnehmen eines Stickstoff und Wasserstoff enthaltenden Spaltgases aus der Reaktoranordnung und Aufbereiten zumindest eines Teils des Spaltgases zu dem Wasserstoffprodukt eingerichtet, wobei die Anlage ferner dafür eingerichtet ist, zur Bereitstellung der Gesamtheizenergiemenge Elektroenergie und Brenngasenergie zu verwenden und in einem ersten und einem zweiten Betriebsmodus betrieben zu werden, und wobei die Anlage außerdem dafür eingerichtet ist, einen Anteil der Elektroenergie an der Gesamtheizenergiemenge in dem ersten Betriebsmodus auf einen höheren Wert als in dem zweiten Verfahrensmodus einzustellen und einen Anteil der Brenngasenergie an der Gesamtheizenergiemenge in dem ersten Verfahrensmodus auf einen niedrigeren Wert als in dem zweiten Betriebsmodus einzustellen.

Vorteile und Merkmale, die bezüglich des vorgeschlagenen Verfahrens und dessen Ausgestaltungen beschrieben wurden, gelten auch für die vorgeschlagene Anlage und umgekehrt. Diese werden entsprechend nur einmalig beschrieben, und auf die jeweiligen Erläuterungen kann verwiesen werden. Entsprechendes gilt auch für Ausgestaltungen der Anlage, die zur Durchführung eines Verfahrens gemäß einer beliebigen Ausgestaltung eingerichtet sein kann.

### Zeichnungen

Im Rahmen der vorliegenden Offenbarung vorgeschlagene Aspekte werden anhand der beiliegenden Zeichnung näher erläutert. Dabei zeigt
Figur 1 ein Verfahren zur Herstellung von Wasserstoff gemäß einer nicht erfindungsgemäßen Ausgestaltung veranschaulicht;
Figur 2 ein Verfahren zur Herstellung von Wasserstoff gemäß einer hier vorgeschlagenen Ausgestaltung veranschaulicht; und
Figuren 3A bis 3C Reaktoranordnungen zum Einsatz in Verfahren zur Herstellung von Wasserstoff gemäß einer hier vorgeschlagener Ausgestaltungen.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale nicht abschließend und/oder beschränkend betrachtet werden. Es versteht sich, dass die zuvor und nachfolgend beschriebenen Vorteile,

Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Wie erwähnt, kann ein in dem vorgeschlagenen Verfahren und seinen Ausgestaltungen verwendete Rohrreaktor insbesondere nach Art eines für die Dampfreformierung oder die konventionelle Ammoniakspaltung eingesetzten Reaktors aufgebaut sein. Bei einem derartigen Reaktor ist eine große Anzahl von Reaktionsrohren in einem Brennraum angeordnet bzw. durch den Brennraum geführt. Diese Reaktorrohre sind das Herzstück des Prozesses, da in ihnen die eigentliche katalytische Reaktion des oder der beteiligten Reaktanden stattfindet.

Eine für die Dampfreformierung typische Anzahl von Reaktionsrohren, wie sie auch im Rahmen des vorgeschlagenen Verfahrens und seinen Ausgestaltungen eingesetzt werden kann, liegt bei kleinen Anlagen bei 10 bis 50, bei mittelgroßen Anlagen bei 50 bis 200, und bei großen industriellen Anlagen bei 200 bis 600. Eine typische industrielle Wasserstoffproduktionsanlage mit einer Kapazität von 100.000 Normkubikmetern pro Stunde kann zwischen 300 und 600 Reaktorrohre enthalten. Allgemein kann daher im Rahmen des vorgeschlagenen Verfahrens und seinen Ausgestaltungen ein Rohrreaktor mit 10 bis 1000 Reaktionsrohren eingesetzt werden.

Die genaue Anzahl der Reaktionsrohre kann anhand der erforderlichen Gasdurchsatzmenge, der Wärmeübertragungseffizienz und der katalytischen Reaktionsgeschwindigkeit berechnet werden. In modernen Anlagen werden oft auch größere Rohre mit verbessertem Katalysator eingesetzt, um die Anzahl der Rohre zu reduzieren und die Effizienz zu steigern. Die Innenflächen der Reaktionsrohre sind mit einem geeigneten Katalysator beschichtet oder die Reaktionsrohre sind mit Katalysatorpellets gefüllt, wie in der eingangs zitierten Literatur beschrieben.

Die Reaktionsrohren können insbesondere aus hochlegiertem Stahl gebildet sein. Der Außendurchmesser beträgt typischerweise 50 bis 200 mm, insbesondere 100 bis 180 mm, die Wandstärke 5 bis 25 mm, insbesondere 8 bis 20 mm und die beheizte Länge 5 bis 20 m, insbesondere 10 bis 14 m. Konventionelle Materialien für Reaktionsrohre sind Chrom-Nickel- oder Chrom-Nickel-Niob-Legierungen wie HK 40 oder IN 519 oder Weiterentwicklungen mit höheren Kriechbruchfestigkeiten. Der Betriebsdruck richtet sich nach den Anforderungen der Reaktion und kann beispielsweise bei 10 bis 50 bar, insbesondere bei 20 bis 40 bar, liegen.

Die Reaktionsrohre können vertikal im Reaktor angeordnet sein und in einer beheizten Kammer hängen, die im vorliegenden Fall mit mehreren Brennern und/oder elektrischen Heizelementen beheizt werden kann. Unabhängig von der konkreten Art der Beheizung und dem dabei umgesetzten Heizkonzept werden entsprechend beheizte Reaktoren auch als "Öfen" bezeichnet. Brenner können entweder an den Seitenwänden oder an der Decke angeordnet sein und sollten eine möglichst gleichmäßige Wärmeverteilung entlang der Rohre erzielen.

Für eine Beheizung mittels elektrischer Energie kann eine direkte elektrische Beheizung erfolgen, bei der Strom an den Reaktionsrohren selbst angelegt wird, beispielsweise in einer bekannten Stern(punkt)verschaltung. Andere Arten der Beheizung sind ebenfalls möglich, beispielsweise induktive Beheizung. Insbesondere können auch Konzepte zur sogenannten indirekten elektrischen Beheizung eingesetzt werden. Eine indirekte elektrische Beheizung kann, wie z.B. in WO 2020/002326 A1 erläutert, unter Verwendung von elektrisch betriebenen Strahlungsheizelementen erfolgen, die für die Erwärmung auf die für die Ammoniakspaltung erforderlichen hohen Temperaturen geeignet sind, wobei diese Heizelemente innerhalb des Ofens so angeordnet sind, dass sie nicht in direktem Kontakt mit den Reaktionsrohren stehen. Die Temperatur in der Ofenkammer kann in den aus dem Stand der Technik bekannten Bereichen liegen. Das Einsatzgemisch kann von oben nach unten durch die Reaktionsrohre geführt werden. Durch eine entsprechende Verweilzeit kann sichergestellt, dass die gewünschte Umsetzung von Ammoniak zu Stickstoff und Wasserstoff in gewünschtem Umfang erfolgt.

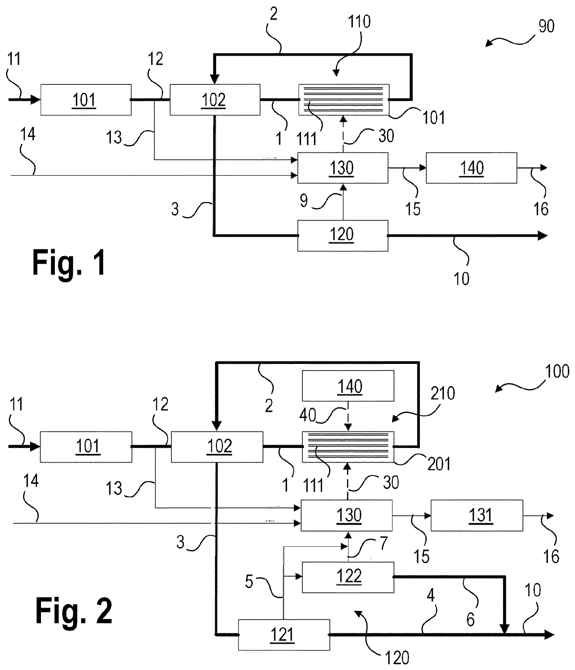

In Figur 1 ist ein Verfahren zur Herstellung von Wasserstoff gemäß einer nicht erfindungsgemäßen Ausgestaltung veranschaulicht und insgesamt mit 90 bezeichnet.

Das Verfahren 90 dient zur Herstellung eines mit 10 bezeichneten Wasserstoffprodukts. In dem Verfahren 90 wird ein Ammoniak enthaltender Reaktionseinsatzes 1 in eine Reaktoranordnung 110 eingespeist, die einen oder mehrere Rohrreaktoren 101 mit einer Vielzahl von Reaktionsrohren 111 aufweist. Die Reaktionsrohre 111 in der Reaktoranordnung 110 werden in dem Verfahren 90 ausschließlich unter Verwendung von Heizenergie beheizt, die in dem Verfahren ausschließlich Brenngasenergie 30 aus einer Brenneranordnung 130 umfasst. In der Reaktoranordnung 110 erfolgt ein Spalten zumindest eines Teils des Ammoniaks des Reaktionseinsatzes 1 unter Verwendung von Wärme, die unter Verwendung der Heizenergie 30 erzeugt wird.

Der Reaktionseinsatz 1 kann aus einem Speisestrom 11 gebildet und in einer Tankanordnung 101 zwischengespeichert werden. Ein aus der Tankanordnung entnommener Entnahmestrom kann in Anteile 12 und 13 aufgeteilt werden, wobei Anteil 12 in einem Feed-Effluent-Wärmetauscher 102 erwärmt werden kann. Anteil 13 kann in der Brenneranordnung 130 verfeuert werden. Alternativ oder zusätzlich kann der Brenneranordnung 130 auch weiteres Brenngas 14 zugeführt werden.

Das Verfahren umfasst ein Entnehmen eines Stickstoff und Wasserstoff enthaltenden Spaltgases 2 aus der Reaktoranordnung 110 und ein Aufbereiten 120 zumindest eines Teils des Spaltgases 2 zu dem Wasserstoffprodukt 10. Bei dem Aufbereiten 120, beispielsweise umfassend eine Druckwechseladsorption, können das Wasserstoffprodukt 10 und ein Restgas 9 gebildet werden, wobei das Restgas 9 in der Brenneranordnung 130 verfeuert werden kann. Ein durch den Betrieb der Brenneranordnung 130 gebildetes Abgas 15 kann einer Aufbereitung 140, beispielsweise umfassend eine Wärmerückgewinnung und/oder Entstickung, zugeführt und als aufbereitetes Abgas 16 aus dem Verfahren 90 ausgeführt werden.

In Figur 2 ist ein Verfahren zur Herstellung von Wasserstoff gemäß einer hier vorgeschlagenen Ausgestaltung veranschaulicht und insgesamt mit 100 bezeichnet.

Das Verfahren 100 unterscheidet sich von dem Verfahren 90 durch die Verwendung einer bivalenten Reaktoranordnung 210, beispielsweise mit einem Reaktor 201 mit einer Vielzahl von Reaktionsrohren 111. Die Reaktoranordnung 210 wird unter Verwendung von Heizenergie beheizt, die in einer Gesamtheizenergiemenge bereitgestellt wird, wobei zur Bereitstellung der Gesamtheizenergiemenge jedoch Elektroenergie 40 einer elektrischen Heizeinrichtung 140 und Brenngasenergie 30 einer Brenneranordnung 130 verwendet werden und das Verfahren 100 einen ersten und einen zweiten Verfahrensmodus umfasst, wobei ein Anteil der Elektroenergie 40 an der Gesamtheizenergiemenge in dem ersten Verfahrensmodus auf einen höheren Wert als in dem zweiten Verfahrensmodus eingestellt wird und ein Anteil der Brenngasenergie 30 an der Gesamtheizenergiemenge in dem ersten Verfahrensmodus auf einen niedrigeren Wert als in dem zweiten Verfahrensmodus eingestellt wird.

Auch hier erfolgt ein Entnehmen eines Stickstoff und Wasserstoff enthaltenden Spaltgases 2 aus der Reaktoranordnung 210 und ein Aufbereiten 120 zumindest eines Teils des Spaltgases 2 zu dem Wasserstoffprodukt 10. Das Aufbereiten 120 umfasst hier jedoch einen ersten Aufbereitungsschritt 121 und einen zweiten Aufbereitungsschritt 122 stromab des ersten Aufbereitungsschritts 122, wobei dem ersten Aufbereitungsschritt 121 das Spaltgas 2 oder ein Teil hiervon zugeführt wird und eine erste Wasserstofffraktion 4 und eine erste Restgasfraktion 5 entnommen werden, wobei dem zweiten Aufbereitungsschritt 122 die erste Restgasfraktion 5 oder ein Teil hiervon zugeführt wird und eine zweite Wasserstofffraktion 6 und eine zweite Restgasfraktion 7 entnommen werden, wobei die erste Restgasfraktion 5 gegenüber dem Spaltgas 2 an Wasserstoff abgereichert und an Stickstoff angereichert ist und die zweite Restgasfraktion 7 gegenüber der ersten Restgasfraktion 5 an Wasserstoff abgereichert und an Stickstoff angereichert ist, und wobei die erste Wasserstofffraktion 4 oder ein Teil hiervon und die zweite Wasserstofffraktion 6 oder ein Teil hiervon zur Bereitstellung des Wasserstoffprodukts 10 verwendet werden.

Zumindest in dem zweiten Verfahrensmodus wird dem zweiten Aufbereitungsschritt 122 nur ein erster Teil der ersten Restgasfraktion 5 zugeführt, wohingegen ein zweiter Teil der ersten Restgasfraktion 5 zur Bereitstellung der Brenngasenergie 30 verwendet, d.h. in der Brenneranordnung 130 verfeuert wird. In dem zweiten Verfahrensmodus oder in dem ersten und zweiten Verfahrensmodus wird die zweite Restgasfraktion 7 oder ein Teil hiervon ebenfalls zur Bereitstellung der Brenngasenergie 30 verwendet, d.h. in der Brenneranordnung 130 verfeuert.

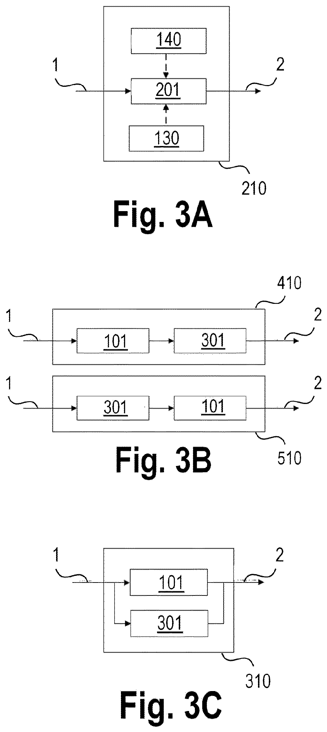

In den Figuren 3A bis 3C Reaktoranordnungen zum Einsatz in Verfahren zur Herstellung von Wasserstoff gemäß einer hier vorgeschlagener Ausgestaltungen veranschaulicht.

Figur 3A zeigt dabei im Wesentlichen die Reaktoranordnung 210 des Verfahrens 100 gemäß Figur 1 mit einem bivalenten Reaktor 201. In Figur 3B sind zwei Alternativen einer seriellen Reaktoranordnung 410, 410 eines mit Brenngasenergie betriebenen Reaktors 101 und eines mit Elektroenergie betriebenen Reaktors 301 veranschaulicht. Figur 3C veranschaulicht eine parallele Reaktoranordnung 310.

## Patentansprüche

1. Verfahren (100) zur Herstellung eines Wasserstoffprodukts (10), das die folgenden Schritte umfasst:
Einspeisen eines Ammoniak enthaltenden Reaktionseinsatzes (1) in eine Reaktoranordnung (210, 310, 410, 510), die einen oder mehrere Rohrreaktoren (101, 201, 301) mit einer Vielzahl von Reaktionsrohren (111) aufweist;
Beheizen zumindest eines Teils der Reaktionsrohre (111) in der Reaktoranordnung (210, 310, 410, 510) unter Verwendung von Heizenergie, die in einer Gesamtheizenergiemenge bereitgestellt wird;
Spalten zumindest eines Teils des Ammoniaks des Reaktionseinsatzes (1) in der Reaktoranordnung (210, 310, 410, 510) unter Verwendung von Wärme, die unter Verwendung der Heizenergie erzeugt wird; und
Entnehmen eines Stickstoff und Wasserstoff enthaltenden Spaltgases (2) aus der Reaktoranordnung (210, 310, 410, 510) und Aufbereiten (120) zumindest eines Teils des Spaltgases (2) zu dem Wasserstoffprodukt (10),
wobei zur Bereitstellung der Gesamtheizenergiemenge Elektroenergie (40) und Brenngasenergie (30) verwendet werden und das Verfahren (100) einen ersten und einen zweiten Verfahrensmodus umfasst,
wobei ein Anteil der Elektroenergie (40) an der Gesamtheizenergiemenge in dem ersten Verfahrensmodus auf einen höheren Wert als in dem zweiten Verfahrensmodus eingestellt wird und ein Anteil der Brenngasenergie (30) an der Gesamtheizenergiemenge in dem ersten Verfahrensmodus auf einen niedrigeren Wert als in dem zweiten Verfahrensmodus eingestellt wird.

2. Verfahren (100) nach Anspruch 1,
wobei das Aufbereiten (120) zumindest eines Teils des Spaltgases (2) einen ersten Aufbereitungsschritt (121) und einen zweiten Aufbereitungsschritt (122) stromab des ersten Aufbereitungsschritts (122) umfasst,
wobei dem ersten Aufbereitungsschritt (121) das Spaltgas (2) oder ein Teil hiervon zugeführt wird und eine erste Wasserstofffraktion (4) und eine erste Restgasfraktion (5) entnommen werden,
wobei dem zweiten Aufbereitungsschritt (122) die erste Restgasfraktion (5) oder ein Teil hiervon zugeführt wird und eine zweite Wasserstofffraktion (6) und eine zweite Restgasfraktion (7) entnommen werden,
wobei die erste Restgasfraktion (5) gegenüber dem Spaltgas (2) an Wasserstoff abgereichert und an Stickstoff angereichert ist und die zweite Restgasfraktion (7) gegenüber der ersten Restgasfraktion (5) an Wasserstoff abgereichert und an Stickstoff angereichert ist, und
wobei die erste Wasserstofffraktion (4) oder ein Teil hiervon und die zweite Wasserstofffraktion (6) oder ein Teil hiervon zur Bereitstellung des Wasserstoffprodukts (10) verwendet werden.

3. Verfahren nach Anspruch 2,
wobei die erste Restgasfraktion einen Gehalt von 35 bis 65 Volumenanteilen Stickstoff und 35 bis 65 Volumenanteilen Wasserstoff aufweist und/oder die zweite Restgasfraktion einen Gehalt von 80 bis 99 Volumenanteilen Stickstoff und 1 bis 20 Volumenanteilen Wasserstoff aufweist.

4. Verfahren nach Anspruch 2 oder 3,
wobei in dem zweiten Verfahrensmodus dem Aufbereitungsschritt (122) ein erster Teil der ersten Restgasfraktion (5) zugeführt wird und ein zweiter Teil der ersten Restgasfraktion (5) zur Bereitstellung der Brenngasenergie (30) verwendet wird.

5. Verfahren nach einem der Ansprüche 2 bis 4,
wobei in dem zweiten Verfahrensmodus oder in dem ersten und zweiten Verfahrensmodus die zweite Restgasfraktion (7) oder ein Teil hiervon zur Bereitstellung der Brenngasenergie (30) verwendet wird.

6. Verfahren nach einem der vorstehenden Ansprüche,
wobei eine Reaktoranordnung (210) verwendet wird, in der zumindest ein Teil der Reaktionsrohre (111) sowohl mit der Elektroenergie (40) als auch mit der Brenngasenergie (30) beheizbar sind, und/oder
wobei eine Reaktoranordnung (310, 410, 510) verwendet wird, in der ein erster Teil der Reaktionsrohre (111) nur mit der Elektroenergie (40) und ein zweiter Teil der Reaktionsrohre (111) nur mit der Brenngasenergie (30) beheizbar sind.

7. Verfahren nach Anspruch 6,
wobei der erste Teil der Reaktionsrohre (111) stromauf oder stromab des zweiten Teils der Reaktionsrohre (111) angeordnet ist.

8. Verfahren nach Anspruch 6,
wobei der erste Teil der Reaktionsrohre (111) parallel zu dem zweiten Teil der Reaktionsrohre (111) angeordnet ist.

9. Verfahren nach einem der Ansprüche 6 bis 8,
wobei der erste Teil der Reaktionsrohre (111) in einem der mehreren Rohrreaktoren (101, 201, 302) und der zweite Teil der Reaktionsrohre (111) in einem weiteren der mehreren Rohrreaktoren (101, 201, 302) angeordnet ist.

10. Anlage zur Herstellung eines Wasserstoffprodukts (10), mit einem oder mehreren Rohrreaktoren (101, 201, 301) mit jeweils einer Vielzahl von Reaktionsrohren (111), in die ein Ammoniak enthaltender Reaktionseinsatz eingespeist werden kann, wobei zumindest ein Teil der Reaktionsrohre (111) in der Reaktoranordnung (210, 310, 410, 510) unter Verwendung von Heizenergie, die in einer Gesamtheizenergiemenge bereitgestellt wird, beheizbar ist, um wenigstens einen Teil des Ammoniaks des Reaktionseinsatzes (1) in der Reaktoranordnung (210, 310, 410, 510) zu spalten und ein Stickstoff und Wasserstoff enthaltenden Spaltgases (2) zu erhalten, das zum Wasserstoffprodukt (10) aufbereitet (120) werden kann, wobei die Anlage dafür eingerichtet ist, zur Bereitstellung der Gesamtheizenergiemenge Elektroenergie (40) und Brenngasenergie (30) zu verwenden und in einem ersten und einem zweiten Betriebsmodus betrieben zu werden, wobei der Anteil der Elektroenergie (40) an der Gesamtheizenergiemenge im ersten Betriebsmodus auf einen höheren Wert als im zweiten Betriebsmodus einstellbar ist.
